(19) Europäisches Patentamt
European Patent Office
Office européen des brevets

(11) EP 1 800 268 B1

(12) **EUROPEAN PATENT SPECIFICATION**

(45) Date of publication and mention of the grant of the patent:
**06.08.2014 Bulletin 2014/32**

(51) Int Cl.:
**G06T 15/20** (2011.01)     **G06T 11/40** (2006.01)
**G06T 15/00** (2011.01)

(21) Application number: **05783880.7**

(22) Date of filing: **09.09.2005**

(86) International application number:
**PCT/NO2005/000334**

(87) International publication number:
**WO 2006/033576 (30.03.2006 Gazette 2006/13)**

(54) **METHOD, SYSTEM AND DEVICE FOR EFFICIENT DISTRIBUTION OF REAL TIME THREE DIMENSIONAL COMPUTER MODELED IMAGE SCENES OVER A NETWORK**

VERFAHREN, SYSTEM UND EINRICHTUNG ZUR EFFIZIENTEN VERTEILUNG VON DREIDIMENSIONALEN ECHTZEIT-COMPUTERMODELL-BILDSZENEN ÜBER EIN NETZWERK

PROCEDE, SYSTEME ET DISPOSITIF DE DIFFUSION EFFICACE EN TEMPS REEL SUR UN RESEAU DE SCENES D'IMAGES TRIDIMENSIONNELLES MODELISEES MATHEMATIQUEMENT

(84) Designated Contracting States:
**AT BE BG CH CY CZ DE DK EE ES FI FR GB GR HU IE IS IT LI LT LU LV MC NL PL PT RO SE SI SK TR**

(30) Priority: **20.09.2004 NO 20043924**
**20.09.2004 US 611578 P**

(43) Date of publication of application:
**27.06.2007 Bulletin 2007/26**

(73) Proprietor: **My Virtual Reality Software AS 0196 Oslo (NO)**

(72) Inventor: **KRISTIANSEN, Stig, Ronald N-0662 Oslo (NO)**

(74) Representative: **Kaminski Harmann et al Patentanwälte AG**
**Landstrasse 124**
**9490 Vaduz (LI)**

(56) References cited:
**US-B1- 6 377 257     US-B1- 6 396 503**

- **TELER E ET AL: "Streaming of Complex 3D Scenes for Remote Walkthroughs", EUROGRAPHICS, CAMBRIDGE, GB, vol. 20, no. 3, 4 September 2001 (2001-09-04), pages 1-9, XP002993844,**

- **CHENG I ET AL: "Adaptive online transmission of 3D texmesh using scale-space analysis", 3D DATA PROCESSING, VISUALIZATION AND TRANSMISSION, 2004. 3DPVT 2004. PROCEEDINGS. 2ND INTERNATIONAL SYMPOSIUM ON THESSALONIKI, GREECE 6-9 SEPT. 2004, PISCATAWAY, NJ, USA,IEEE, 6 September 2004 (2004-09-06), pages 688-695, XP010725258, DOI: 10.1109/TDPVT.2004.1335305 ISBN: 978-0-7695-2223-4**
- **CHENG I ET AL: "Super high resolution 3D imaging and efficient visualization", 3D DATA PROCESSING VISUALIZATION AND TRANSMISSION, 2002. PROCEEDINGS. FIRST INTERNATIONAL SYMPOSIUM ON JUNE 19-21, 2002, PISCATAWAY, NJ, USA,IEEE, LOS ALAMITOS, CA, USA, 19 June 2002 (2002-06-19), pages 186-189, XP010596656, ISBN: 978-0-7695-1521-2**
- **TELER E. ET AL: 'Streaming of Complex 3D Scenes for Remote Walkthroughs' EUROPEAN ASSOCIATION FOR COMPUTER GRAPHICS. 22ND ANNUAL CONFERENCE, EUROGRAPHICS 2001 vol. 20, no. 3, 04 September 2001 - 07 September 2001, MANCHESTER, UK, XP002993844**
- **MARVIE J-E. ET AL: 'Remote Rendering of Massively Textures 3D Scenes Through Progressive Texture Maps' THE 3RD (IASTED) CONFERENCE ON VISUALISATION, IMAGING AND IMAGE PROCESSING vol. 2, September 2003, pages 756 - 761, XP002993845**

**Description**

The present invention is related to a method, system and device for distributing in real time data related to three dimensional computer modeled image scenes over a network, and more specifically to a method, system and device for distributing in real time, over a network, texture, geometry and other related three dimensional parameters for said image scenes dependent on an importance value according to the attached independent claims 1, 6 and 10.

Three dimensional modeled image scenes used for example in virtual reality scenes, in three dimensional "live" modeling as in Computer Aided Design Systems and other types of computer visualization techniques etc., three dimensional geometry parameters and three dimensional objects called textures are defining appearance etc. of objects in a scene or in a series of scenes. The computer data files for complex huge models may be very large and can typically span from several megabytes to gigabytes in size, and may be impractical to distribute over a network with limited bandwidth. Even when there is no real time requirement, the time used for the transfer may be too large to be of practical use.

Another aspect of the client/server rendering problem is the capacity in each client computer. There will always be a limited amount of resources available for rendering purposes, for example a limited amount of allocated memory for the images downloaded to the client computer. In prior art this is usually solved by limiting the file size for downloading, to the capacity of the client computer with the lowest available resources for the task. Therefore, automatic scaling is a problem with prior art solutions, especially scaling to individual client computer requirements and possibilities.

A common technique in real time rendering engines is to use so called mipmap textures. This means that the rendering engine has several copies of each texture stored in decreasing level of detail for each texture. Usually, each level provides half the previous level of detail down to one by one pixel textures. Prior art such as DirectX or OpenGL utilize these mipmap levels to filter between the different levels of detail dependent on a distance between an image capturing device such as a camera or generally speaking, a distance of view from an observer or observation point to an object in a scene. In a three dimensional view, elements closer to the observing point is rendered with more details in the texture than those parts farther away from the observing point. Usually, all the texture levels for all textures must be transferred from a server prior to the rendering of a scene in a client computer. Some prior art solutions transfer only a subset of the mipmaps and utilize filtering to reduce aliasing artifacts in the rendered images.

The common method in prior art for modeling a data set defining scenes for three dimensional visualization, is by utilizing a reference system for a complete scene, sometimes referenced as a global reference system, and by utilizing local reference systems each attached to objects in said scene. In the global reference system, vectors describe shapes and locations of objects while the local reference systems provide polygons for the texture descriptions. To provide enough resolution for a texture, the polygons are defined as floating point numbers. The same texture may be utilized by different objects in a scene. However, the enormous amount of data that the visualization of such three dimensional real time scenes needs, require some trade off between the quality of the visual appearance on the computer display and the amount of data necessary to distribute from a server to a client computer, for example. The known "trade off" techniques as known to a person skilled in the art, does not take into account the visual appearance as such, but assume that distance of view and filtering alone will be a sufficient trade off to provide a workable solution.

In US 6,377,257 B1 with the title: "Method and Apparatus for delivering 3D Graphics in a networked environment", it is disclosed a solution addressing these matters by providing a seamless continuous rendering options between server-only rendering and client-only rendering. According to this solution, a Scene model is partitioned into at least two parts. Initially, said first part comprising initial geometry description of said scene is downloaded to the client computer from the server. While the client computer executes the rendering based on the initial file comprising said first part, the server computer may continue to download said second part of said scene, thereby for example providing more details in the scene when the client computer starts rendering said second part. However, the speed of the downloading is improved, but to be able to achieve a necessary level of details in the visualization may require a substantial amount of further downloads of a specific scene.

US 6,396,503 B1 disclose a technique comprising downloading texture files based on pixel count or texture resolution (level of details) of objects, and an embodiment according to this invention is selecting those texture files that at any time during the rendering process has the highest number of pixels (highest level of details). However, objects that are not visible on the screen will not be considered. For example, a camera may have an object outside its present viewing field, and when a user is turning the camera the object will instantly be visible. If the visibility of the object is important (high level of detail is necessary), it will take time to improve the visible quality of the image on the screen by further downloading higher resolution texture files.

The publication "Remote Rendering of Massively Textured 3D Scenes Through Progressive Texture Maps" by Marvie and Bouatouch, 3rd (LASTED) conference on Visualization, Imaging and Image Processing, September 2003, Vol. 20, Nr. 3, ISBN 0-88986-382-2, disclose a technique addressing the rendering problem comprising calculating an average pixel count for all objects in a scene as viewed by for example a camera from different distances and viewing angles and storing these calculations as a dataset called Binary Space Partitioning (BSP). The BSP system can not be utilized for dynamic models, for example comprising moving objects. Further, as in US 6,396,503 B1, the only parameter used to provide a measure of visibility is the pixel count. Parameters such as distance, hidden objects etc. are not taken into account when prioritizing downloads of texture files.

The publication "Streaming of Complex 3D Scenes for remote Walkthrough", European Association for Computer Graphics, Teller and Lischinski, 22nd Annual Conference, Eurographics 2001, 4-7 September 2001, Manchester, UK, Vol. 20, Nr. 3, ISSN 0167-7055, disclose a technique comprising calculating coverage in a projection of a rectangle enclosing an object on the computer screen as seen by for example a camera. Objects projected outside the screen will then have zero visibility according to this disclosure.

Practical use of for example Computer Aided Design Systems using three dimensional real time visualization techniques, for example to certify and verify a design, require another type of trade off to provide a workable solution. It is necessary to control the level of detail to be able to evaluate a design correctly in every detail. Therefore there is a need to controllably define the importance of an object in a scene regardless of visibility, distance, pixel count etc.

In other real time three dimensional visualization systems and applications, the speed of rendering and quality of images may be mandatory for the usefulness of such systems. Therefore, there is a need for a method, system and device that can improve the visual quality and speed of rendering in such real time three dimensional visualization systems. The present invention is defined by the attached independent claims 1, 6 and 10.

According to an example of embodiment of the present invention, a client computer requesting a three dimensional modeled image scene from a server, first will receive an initial amount of data comprising the necessary geometrical data defining the scene in the vicinity of an observer or an observing point (such as a camera), and a minimum of texture data needed to provide a minimum of visual quality for initial rendering. When this minimum of data is rendered, a process according to the present invention is started to evaluate which further data is necessary to download from the server to improve and refining the visual quality. The order of downloading further data is decided by the client computer based on a set of rules intended to provide a better visual quality of the rendered three dimensional images displayed on the client computer display. According to the present invention, this provides a streaming effect on the three dimensional views displayed in a sequence.

It is yet another aspect of the present invention to provide compressing of geometry data before transferring such data form a server to a client. According to an example of embodiment of the present invention, geometry data residing on a server are converted from floating point format to an integer format thereby providing a significant reduction in the number of bytes necessary to transfer for visualization on the client computer. According to this example of embodiment, the client computer convert the geometry data received in integer format back to floating point format before a rendering engine is using the geometry data.

Figure 1 illustrates an example of a camera viewing a scene comprising three objects.

Figure 2 illustrates how the scene depicted in figure 1 is displayed on a computer display.

Figure 3 is a flow diagram illustrating steps of downloading further mipmaps according to an example of embodiment of the present invention.

Figure 4a is a flow diagram illustrating the steps of compressing data according to an example of embodiment of the present invention.

Figure 4b is a flow diagram illustrating a continuation of the flow diagram depicted in figure 4a.

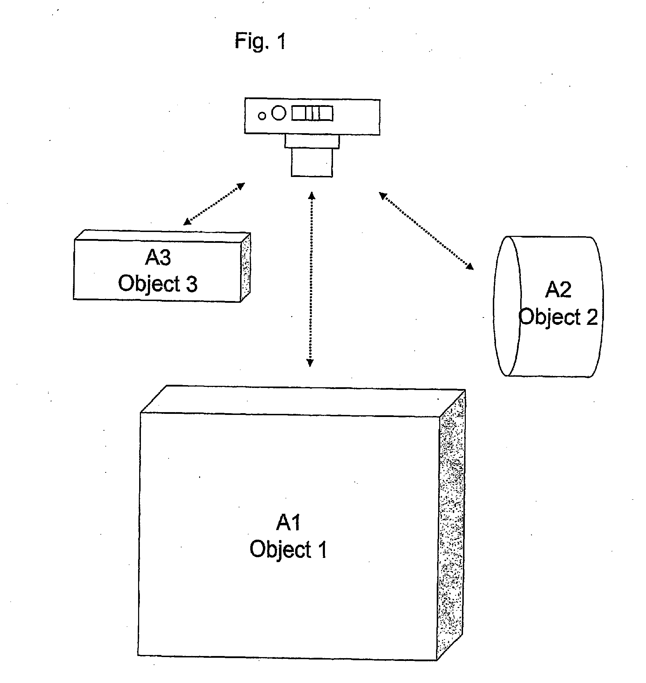

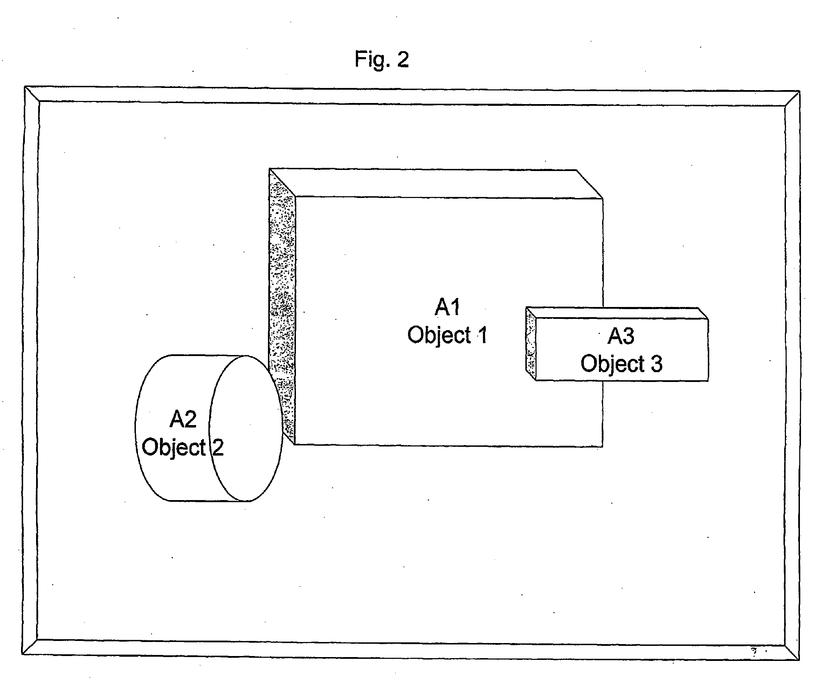

Figure 1 is illustrating how a camera for example can view three objects located at different distances and angles of view from the camera. The objects may have different shapes and textures. Figure 2 is illustrating how these three objects can be imaged on a flat computer screen. According to prior art the rendering engine will display the object A2 and object A3 with a higher degree of details than object A1 since the object A2 and A3 are located closer to the observing point (camera).

According to the present invention, first a minimum of data is downloaded from a server to provide a minimum of detailed quality of visualization of a scene on the client computer display. The geometrical data defines the shapes of the present objects while the texture data provides a minimum of quality for the appearance of the objects on the display. Thereafter, a set of rules are used in the client computer to decide which additional texture levels that are to be downloaded from the server.

The level of details (or the number of mipmap levels) used in the texture should also reflect the importance of an object as displayed on a computer display. According to the present invention, several factors may contribute to the importance of an object, and may contribute in adjusting the level of details or number of mipmap levels that are used on displayed objects.

According to the present invention, the evaluation of further downloading of details is decided individually in each separate client computer. Therefore, any embodiment of the present invention will scale automatically to the resources available or allocated to the rendering task in every client computer in the network.

According to the present invention, an importance factor for an object is how much a texture covers a computer display or screen. The reason being, that if it covers a substantial portion of the available surface of the display, it does so because a user wants to view an object, as detailed as possible. According to the present invention, a texture is associated with a screen coverage factor. In an example of embodiment of the present invention the screen coverage factor may be estimated on basis of the viewing angle from the observation point, the distance to the object from the observation point and the size of the object. Some prior art rendering engines may report a screen coverage factor for an object back to the system. This parameter is designated as C in the following disclosure.

Textures not visible at present on the display, but that are associated with objects in the vicinity of the observing point, and therefore probably will be downloaded soon, are associated with an importance value reflecting this situation. According to the present invention, a texture is associated with an offset value for the screen coverage factor described above. This parameter is designated as $C_b$ in the following disclosure. $C_b$ may be estimated or reported back as described above for C.

Another importance factor may be the angle of view from the observing point to the object. In an example not forming part of the present invention, if a camera is pointing directly onto an object, as the camera does on object A1 in figure 1, it does so because the scene comprises an object of high importance for the scene. According to an example not forming part of the present invention, a texture may be associated with an angle of view. This parameter is designated as $A_v$ in the following disclosure. $A_v$ may be determined in the global reference system.

The importance of an object may also be a design parameter. In an example not forming part of the present invention, an importance value may be assigned to an object when it is created or instantiated in the computer system. This parameter is designated as B in the following disclosure.

The number of mipmap levels downloaded to a client computer at any point in time may differ from the total number of mipmap levels available on the server. If the difference is large it implies that there are many levels of details left for downloading from the server. A high number of mipmap levels or details indicate that the corresponding texture is regarded as important by the designer of the texture. Therefore it is possible to assign a high value of importance to such a texture. However, if the difference is zero there is no point in providing an importance to the texture since no further mipmap level is available for downloading. According to an example not forming part of the present invention, an importance factor reflecting this number of levels left on the server may be assigned to a texture. This parameter is designated as N in the following disclosure.

The distance from a viewing point (or camera) to an object using the texture during rendering of the scene is designated as A in the following disclosure. A may be determined in the global reference system.

According to the present invention there exists a relationship between these identified parameters providing an importance for a texture when used on an object during rendering of a scene. However, this is not identified as an analytical deduced relationship between the parameters.

The inventors have conducted experiments providing an indication that there is an inverse relationship with the distance A. That is, the importance factor is proportional to 1/A. In nature there is very often found relationships that are proportional to the inverse of the square of a parameter. For example, gravitation is proportional to $1/r^2$. Since mipmap levels provide half the details of a preceding mipmap level, any linear relationship with 1/A will provide a quadratic relation between a mipmap level and an importance factor associated with this mipmap level. Further experiments performed by the inventors suggest that there is a relationship between how mipmap levels are decreasing in level of detail and the importance factor. For example, a linear decrease in detail between consecutive mipmap levels implies an importance factor proportional to $1/A^2$. Other examples not being part of the invention are not limited to importance factors that provide a linear relationship proportional to 1/A, but encompass all relationships proportional to any inverse function that is possible to envisage for the distance A.

According to an example of embodiment of the present invention, an initiated transfer of a scene from a server to a client computer, comprises transfer of a file providing vectors defined in the global reference system for some of the objects in the vicinity of the observation point for the scene, and sufficient texture data providing a minimum of visual quality for the scene. Such initial files describing initial data for the different scenes may be provided on the server by a separate process on the server itself or as a one time operation when the scenes are created or instantiated on the server computer.

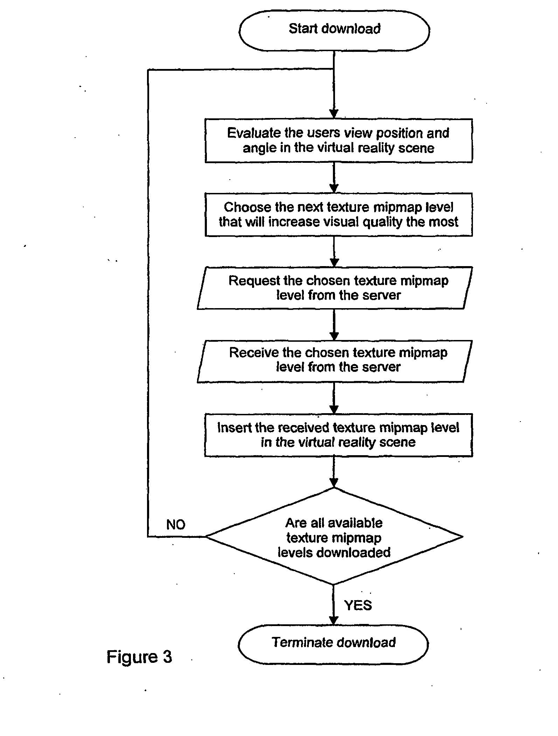

When the initial file for a scene is received on the client computer, the client computer initiate a series of steps to evaluate if it is necessary to download further mipmap levels to the client computer. Figure 3 illustrates a flow diagram of the basic steps that are performed for selecting the mipmap levels.

According to an example of embodiment of the present invention, the client computer will calculate the importance factors for all textures used in the scene. Based on the highest importance number, extra mimpap levels are downloaded from the server providing a better visual quality that only affects the objects that are important for the user or application of the system, thereby reducing the number of transfers that are necessary to perform to achieve the desired level of visual quality.

In another example of embodiment of the present invention, the calculation of the importance factors may be performed on the previous frame since it is usual that a camera or observing point never moves fast around the scenes. The consecutive frame and the preceding frame are both associated with the present scene by just a slight difference in observation point. A system parameter incorporated in the client/server communication may signal which texture data to be used in the evaluation of the importance factor. In an example, not forming part of the present invention the choice of texture data used for the evaluation may be user selectable.

The step of calculating the importance factors for the different textures use a combination of parameters as described above to derive the importance values.

In an example, not forming part of the present invention , the importance factor P is defined as:

$$P = \frac{C}{A}$$

In yet another example, not forming part of the present invention the importance factor is defined as:

$$P = \frac{1}{AA_v}$$

In the invention the importance factor is defined as:

$$P = \frac{C + C_b}{A}$$

In yet another example, not forming part of the present invention the importance factor is defined as:

$$P = \frac{B}{A}$$

In yet another example, not forming part of the present invention the importance factor is defined as:

$$P = \frac{BN^2}{A}$$

Experiments conducted by the inventors indicate that a best mode of embodiment of the importance factor, not forming part of the present invention is:

$$P = \frac{BN^2 \sqrt{C + C_b}}{A}$$

According to another aspect of the invention, a reduction of the amount of data that is necessary to transfer between the server and the client computer may in addition to the above disclosed steps further comprise compressing the floating point values for the texture data.

Texture coordinates are used to map a texture onto geometry as known to a person skilled in the art. The coordinates may consist of two floating point values x and y where (x,y)=(0.0,0.0) reference one corner of the image as described by the local reference systems associated with the objects. (x,y)=(1.0,1.0) denotes the opposite corner. However, texture coordinates may be higher than one or lower than zero when the textures are tiled several times over the geometry as known to a person skilled in the art.

According to an example of embodiment of the present invention, relevant data for the scenes stored on the server can be converted to integer format without losing significant precision. For example, a vertex associated with an object being 10 meters long, the error introduced by converting a floating point number to an integer value would be +/-10m/65536 equal +/- 0.1526 millimeter, which is normally an insignificant error. However, according to the present example of embodiment, data are tested to determine if they exceed a maximum value. According to the present example of embodiment, individual threshold values may be assigned to texture data, vertex data, etc. If they exceed the assigned maximum value, the original data are used. When the integer values are transferred to the client computer, the client computer converts the integers back to floating point format before they are used by the rendering engine.

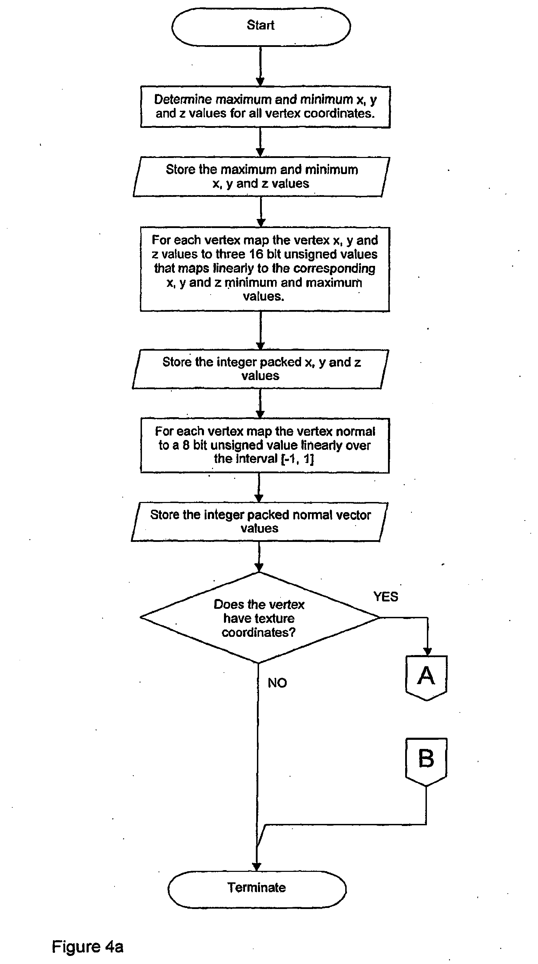

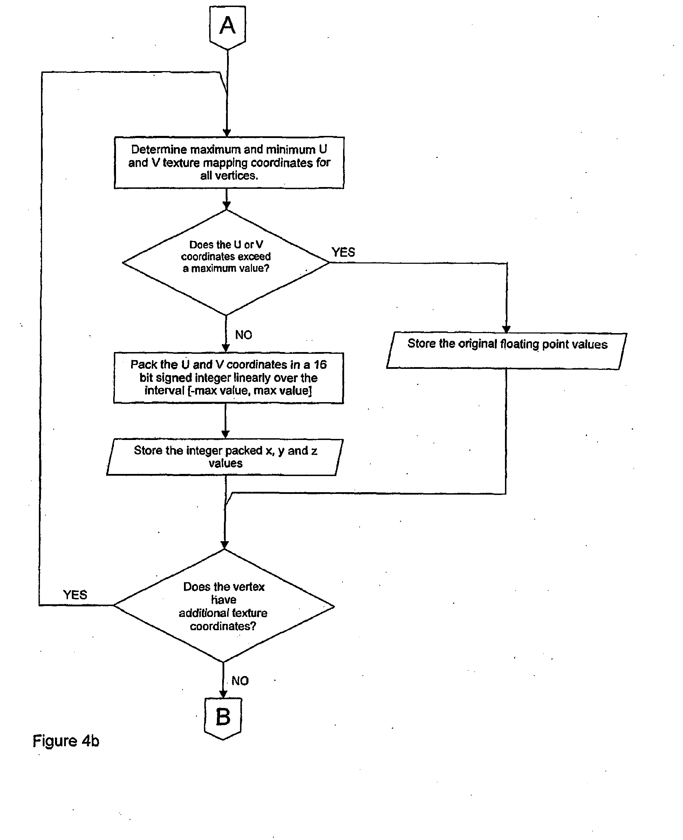

Experiments conducted by the inventor shows that more than 40% reduction in data transfer may be achieved by compressing data. Figure 4a and 4b illustrates a flow diagram depicting the steps for the conversion of data associated with one object.

According to an example of embodiment of the present invention, the relevant data constituting a design of scenes for three dimensional rendering on a client computer comprise a software module on said server providing said initial files related to scenes that provide the sufficient minimum visual quality that is required by the system. In another example of embodiment, the conversion from floating point format to integer format is performed in a software module on said server at the same time the initial files are generated, thereby providing compression of initial files, thereby providing a much faster transfer of the initial file, and hence faster rendering of the graphical initial file as seen by the user of the system.

In the present example of embodiment, the client computer performs the evaluation of the importance factor in a software module, and the software request the server for additional data for downloading to improve the visual quality on the client computer based on the related importance factors. The conversion from integer format back to floating point format is done in a software module on the client computer.

According to an aspect of the present invention, any embodiment of the present invention scale automatically to the available resources in each client computer, However, according to an embodiment of the present invention, the same rule set or evaluation of said importance factor may be used to controllable release for example allocated memory for rendering purposes by deleting mipmaps in the client computer memory associated with importance factors with lower values than those used in the present rendering. In this simple manner, the present invention may provide a dynamic rendering that always provides the highest possible visual quality that is possible on a client computer given a limited amount of local resources in said client computer.

According to yet another example of embodiment of the present invention, the evaluation of the importance factor is done in an integrated circuit that may be designed to perform the algorithms as outlined above as known to a person skilled in the art. ASIC circuit technology is possible to exploit for such a design. Micro controller technology may also implement said algorithms as known to a person skilled in the art. In an example, not forming part of the present invention said integrated circuit communicates with the server computer via a selected communication link, such as an internal computer bus, external communication bus such as an USB port, etc. while the result of the calculations are distributed together with the texture data to each client computer in the network.

In yet another embodiment of the integrated circuitry, the integrated circuitry is located in each client computer receiving texture data via an internal data bus and providing the results of the calculations directly to rendering engine residing in the client computer via the internal data bus of the client computer.

In yet another example of embodiment of the present invention, the conversion from floating point format to integer format may also be implemented as an integrated circuit. The communication to and from this conversion circuitry may be arranged as described above.

Such integrated circuits implementing aspects of the present invention may be part of a computer system, such as a personal computer, as known to a person skilled in the art.

**Claims**

1. Method for distributing three dimensional computer modeled image scenes from a server to a client computer over a network, wherein modeling of scenes comprises
geometrical data describing shapes of objects and texture data describing appearance of said objects in said scenes,
wherein said method comprises the steps of :
transferring an initial file on request from said server to said client computer providing a minimum of geometrical data and texture data providing a minimum of visual quality for an initial rendering,
in said client computer, evaluating which further texture data is necessary to download from said server to said client computer for improving the initial visual quality on basis of calculating an importance factor P for all textures used in the scene wherein the importance factor P is defined as

$$p = \frac{C + C_b}{A},$$

where C is a screen coverage factor related to how much a texture covers a computer display surface, $C_b$ is a screen coverage factor related to how much of a texture covers an object located in a scene outside a computer display edge in the vicinity of the observing point, and 1/A is the inverse distance to said object from an observation point.

2. Method according to claim 1, wherein said step of evaluating said importance factor further comprises the step of:

   - downloading texture data comprising more visual details associated with an object in said scene having highest said importance factor.

3. Method according to claim 1 and 2, comprising repeating evaluating said importance factor associated with objects of the current rendering and downloading further texture data based on said evaluation further improving the visual appearance of said rendering until there is no more available allocated memory in said client computer.

4. Method according to claim 3, further comprising deleting texture data associated with lower importance factors than current evaluated and used in said present rendering when there is no more available allocated memory in said client computer.

5. Method according to claim 1, wherein said transferring of said initial file further comprises the steps of:

   evaluate if said geometrical data and said texture data are within predefined limits, and if they are, convert said data from floating point format to integer format.

6. Computer for distributing three dimensional computer modeled image scenes from a server to a client computer over a network, wherein modelling of

11      **EP 1 800 268 B1**      12

scenes comprises geometrical data describing shapes of objects and texture data describing appearance of said objects in said scenes, wherein said computer system comprises:

means in said client computer to request said server to transfer an initial file comprising a minimum of geometrical data and texture data providing a minimum of visual quality for initial rendering on a display in communication with said client computer,

means in said client computer for calculating an importance factor P for all textures used in the scene , wherein the importance factor is arranged as a pointer to associated texture data, and

means in said client computer to request said server to download further texture data with highest importance factor,

wherein the importance factor P is defined as

$$P = \frac{C + C_b}{A},$$

where C is a screen coverage factor related to how much a texture covers a computer display surface, $C_b$ is a screen coverage factor related to how much of a texture covers an object located in a scene outside a computer display edge in the vicinity of the observing point, and 1/A is the inverse distance to said object from an observation point.

7. System according to claim 6, wherein said means continues repeating evaluating said importance factor associated with objects of current rendering and downloading from said server further texture data based on said evaluation, further improving the visual appearance of said rendering until there is no more available allocated memory in said client computer.

8. System according to claim 7, wherein said means further comprising deleting texture data associated with lower importance factors than current evaluated and used in said present rendering when there is no more available allocated memory in said client computer.

9. Computer system according to claim 6, comprising:

means in said server for testing if said geometrical data and said texture data are inside predefined limits,

means in said server to convert said geometrical data and said texture data from floating point format to integer format,

means in said server to instantiate an initial file for a scene comprising said converted data,

means in said client computer to convert said converted data back from integer format to floating point format before rendering said data.

10. Device used in a computer system for distributing three dimensional computer modeled image scenes from a server to a client computer over a network, wherein said computer modeled image scenes comprises geometrical data describing shapes of objects and texture data describing appearance of said objects, wherein said device comprises:

means for requesting said server to transfer an initial file comprising a minimum of geometrical data and texture data providing a minimum of visual quality for initial rendering on a display in communication with said client computer

means for calculating an importance factor P for all textures used in the scene and

means for requesting said server to download further texture data with highest importance factor

wherein the importance factor P is defined as

$$P = \frac{C + C_b}{A},$$

where C is a screen coverage factor related to how much a texture covers a computer display surface, $C_b$ is a screen coverage factor related to how much of a texture covers an object located in a scene outside a computer display edge in the vicinity of the observing point, and 1/A is the inverse distance to said object from an observation point.

**Patentansprüche**

1. Verfahren zur Verteilung von dreidimensionalen Computermodell-Bildszenen von einem Server zu einem Client-Computer über ein Netzwerk, wobei das Modell der Szenen Folgendes umfasst: geometrische Daten, die Formen von Objekten beschreiben, und Texturdaten, die das Erscheinungsbild der Objekte in den Szenen beschreiben, wobei das Verfahren die folgenden Schritte umfasst:

Übertragen einer anfänglichen Datei auf Anfrage vom Server zum Client-Computer, die ein Minimum an geometrischen Daten und Texturdaten bereitstellt, um ein Minimum an visueller Qualität für eine anfängliche Wiedergabe zu ermöglichen,

im Client-Computer erfolgendes Ermitteln, welche weiteren Texturdaten vom Server zum Client-Computer heruntergeladen werden müssen, um die anfängliche visuelle Qualität zu ver-

7

bessern, und zwar durch die Berechnung eines Bedeutungsfaktors P für alle in der Szene verwendeten Texturen, wobei der Bedeutungsfaktor P wie folgt definiert wird:

$$P = \frac{C + C_b}{A},$$

wobei C ein Bildschirmabdeckungsfaktor ist, der beschreibt, wie weit eine Textur eine Computerbildschirmoberfläche bedeckt, wobei $C_b$ ein Bildschirmabdeckungsfaktor ist, der beschreibt, wie weit eine Textur ein Objekt bedeckt, das sich in einer Szene außerhalb eines Randes einer Computeranzeige in der Nähe des Beobachtungspunkts befindet, und wobei 1/A der Kehrwert der Distanz zu dem Objekt von einem Beobachtungspunkt ist.

2. Verfahren nach Anspruch 1, wobei der Schritt des Ermittelns des Bedeutungsfaktors ferner den folgenden Schritt umfasst:

- Herunterladen von Texturdaten mit mehr visuellen Einzelheiten, die mit einem Objekt in der Szene verbunden sind, das den höchsten Bedeutungsfaktor aufweist.

3. Verfahren nach Anspruch 1 und 2, umfassend das Wiederholen des Ermittelns des Bedeutungsfaktors, der mit Objekten der laufenden Wiedergabe verbunden ist, und das Herunterladen von weiteren Texturdaten auf Basis dieser Ermittlung, wodurch das visuelle Erscheinungsbild der Wiedergabe weiter verbessert wird, bis im Client-Computer kein zugewiesener Speicher mehr verfügbar ist.

4. Verfahren nach Anspruch 3, ferner umfassend das Löschen von Texturdaten, die mit niedrigeren Bedeutungsfaktoren verbunden sind, als sie aktuell ermittelt wurden, und die in der laufenden Wiedergabe verwendet werden, wenn im Client-Computer kein zugewiesener Speicher mehr verfügbar ist.

5. Verfahren nach Anspruch 1, wobei das Übertragen der anfänglichen Datei ferner die folgenden Schritte umfasst:

Ermitteln, ob sich die geometrischen Daten und die Texturdaten innerhalb vordefinierter Grenzen befinden, und falls dies der Fall ist, Konvertieren der Daten von einem Gleitkommaformat in ein Ganzzahlformat.

6. Computer zur Verteilung von dreidimensionalen Computermodell-Bildszenen von einem Server zu einem Client-Computer über ein Netzwerk, wobei das Modell der Szenen Folgendes umfasst: geometrische Daten, die Formen von Objekten beschreiben, und Texturdaten, die das Erscheinungsbild der Objekte in den Szenen beschreiben, wobei das Computersystem Folgendes umfasst:

Mittel in dem Client-Computer, um den Server aufzufordern, eine anfängliche Datei zu übertragen, die ein Minimum an geometrischen Daten und Texturdaten enthält, die ein Minimum an visueller Qualität für eine anfängliche Wiedergabe auf einer Anzeige bereitstellt, die mit dem Client-Computer verbunden ist, Mittel im Client-Computer, um einen Bedeutungsfaktor P für alle in der Szene verwendeten Texturen zu berechnen, wobei der Bedeutungsfaktor P als Hinweis auf zugeordnete Texturdaten angeordnet ist, und Mittel im Client-Computer, um den Server aufzufordern, weitere Texturdaten mit dem höchsten Bedeutungsfaktor herunterzuladen, wobei der Bedeutungsfaktor wie folgt definiert wird:

$$P = \frac{C + C_b}{A},$$

wobei C ein Bildschirmabdeckungsfaktor ist, der beschreibt, wie weit eine Textur eine Computerbildschirmoberfläche bedeckt, wobei $C_b$ ein Bildschirmabdeckungsfaktor ist, der beschreibt, wie weit eine Textur ein Objekt bedeckt, das sich in einer Szene außerhalb eines Randes einer Computeranzeige in der Nähe des Beobachtungspunkts befindet, und wobei 1/A der Kehrwert der Distanz zu dem Objekt von einem Beobachtungspunkt ist.

7. System nach Anspruch 6, wobei die Mittel das Wiederholen der Ermittlung des Bedeutungsfaktors, der mit Objekten der laufenden Wiedergabe verbunden ist, und das Herunterladen von weiteren Texturdaten auf Basis dieser Ermittlung fortsetzen, wodurch das visuelle Erscheinungsbild der Wiedergabe weiter verbessert wird, bis im Client-Computer kein zugewiesener Speicher mehr verfügbar ist.

8. System nach Anspruch 7, wobei die Mittel ferner das Löschen von Texturdaten bewirken, die mit niedrigeren Bedeutungsfaktoren verbunden sind, als sie aktuell ermittelt wurden, und die in der laufenden Wiedergabe verwendet werden, wenn im Client-Computer kein zugewiesener Speicher mehr verfügbar ist.

9. Computersystem nach Anspruch 6, umfassend:

Mittel im Server, um zu testen, ob sich die geometrischen Daten und die Texturdaten innerhalb vordefinierter Grenzen befinden,
Mittel im Server, um die geometrischen Daten und die Texturdaten von einem Gleitkommaformat in ein Ganzzahlformat zu konvertieren,
Mittel im Server, um eine anfängliche Datei für eine Szene zu erzeugen, welche die konvertierten Daten enthält,
Mittel in dem Client-Computer, um die konvertierten Daten vor der Wiedergabe der Daten vom Ganzzahlformat zurück in das Gleitkommaformat zu konvertieren.

10. Vorrichtung zur Verwendung in einem Computersystem zur Verteilung von dreidimensionalen Computermodell-Bildszenen von einem Server zu einem Client-Computer über ein Netzwerk, wobei die Computermodell-Bildszenen Folgendes umfassen: geometrische Daten, die Formen von Objekten beschreiben, und Texturdaten, die das Erscheinungsbild der Objekte beschreiben,
wobei die Vorrichtung Folgendes umfasst:

Mittel, um den Server aufzufordern, eine anfängliche Datei zu übertragen, die ein Minimum an geometrischen Daten und Texturdaten enthält, die ein Minimum an visueller Qualität für eine anfängliche Wiedergabe auf einer Anzeige bereitstellt, die mit dem Client-Computer verbunden ist,
Mittel zum Berechnen eines Bedeutungsfaktors P für alle in der Szene verwendeten Texturen, und
Mittel, um den Server aufzufordern, weitere Texturdaten mit dem höchsten Bedeutungsfaktor herunterzuladen,
wobei der Bedeutungsfaktor wie folgt definiert wird:

$$P = \frac{C + C_b}{A},$$

wobei C ein Bildschirmabdeckungsfaktor ist, der beschreibt, wie weit eine Textur eine Computerbildschirmoberfläche bedeckt, wobei $C_b$ ein Bildschirmabdeckungsfaktor ist, der beschreibt, wie weit eine Textur ein Objekt bedeckt, das sich in einer Szene außerhalb eines Randes einer Computeranzeige in der Nähe des Beobachtungspunkts befindet, und wobei 1/A der Kehrwert der Distanz zu dem Objekt von einem Beobachtungspunkt ist.

**Revendications**

1. Procédé pour la diffusion de scènes d'images tridimensionnelles modélisées mathématiquement d'un serveur à un ordinateur client par un réseau, la modélisation de scènes comprenant
des données géométriques décrivant des formes d'objets et des données de texture décrivant l'apparence desdits objets dans lesdites scènes,
ledit procédé comprenant les étapes de :

transfert d'un fichier initial sur demande dudit serveur audit ordinateur client en fournissant un minimum de données géométriques et de données de texture fournissant un minimum de qualité visuelle pour un rendu initial,
dans ledit ordinateur client évaluation de quelles autres données de texture sont nécessaires pour télécharger dudit serveur audit ordinateur client pour améliorer la qualité visuelle initiale sur la base du calcul d'un facteur d'importance P pour toutes les textures utilisées dans la scène, le facteur d'importance P étant défini comme

$$p = \frac{C + C_b}{A},$$

où C est un facteur de couverture d'écran qui a rapport à combien une texture couvre une surface d'écran de l'ordinateur, $C_b$ est un facteur de couverture d'écran qui a rapport à combien une texture couvre un objet situé dans une scène à l'extérieur d'un bord d'écran de l'ordinateur à proximité du point d'observation et 1/A est la distance inverse audit objet à partir d'un point d'observation.

2. Procédé selon la revendication 1 dans lequel ladite étape d'évaluation dudit facteur d'importance comprend de plus l'étape de :

téléchargement des données de texture qui comprennent plus de détails visuels associés à un objet dans ladite scène qui a ledit facteur d'importance le plus élevé.

3. Procédé selon les revendications 1 et 2 comprenant la répétition de l'évaluation dudit facteur d'importance associé aux objets du rendu actuel et le téléchargement d'autres données de texture sur la base de ladite évaluation en améliorant encore l'apparence visuelle dudit rendu jusqu'à ce qu'il n'y ait plus de mémoire allouée disponible dans ledit ordinateur client.

4. Procédé selon la revendication 3 comprenant de plus l'effacement des données de texture associées aux facteurs de moindre importance qu'évalués actuellement et utilisés dans ledit présent rendu lorsqu'il n'y a plus de mémoire allouée disponible dans ledit ordinateur client.

5. Procédé selon la revendication 1 dans lequel ledit transfert dudit fichier initial comprend de plus les étapes :

   d'évaluation si lesdites données géométriques et lesdites données de texture sont au sein de limites prédéfinies et si elles le sont la conversion desdites données du format virgule flottante au format de nombre entier.

6. Ordinateur pour la diffusion de scènes d'images tridimensionnelles modélisées mathématiquement d'un serveur à un ordinateur client par un réseau, la modélisation de scènes comprenant des données géométriques décrivant des formes d'objets et des données de texture décrivant l'apparence desdits objets dans lesdites scènes, ledit système d'ordinateur comprenant :

   des moyens dans ledit ordinateur client pour demander audit serveur de transférer un fichier initial comprenant un minimum de données géométriques et de données de texture fournissant un minimum de qualité visuelle pour un rendu initial sur un écran en communication avec ledit ordinateur client,
   des moyens dans ledit ordinateur client pour calculer un facteur d'importance P pour toutes les textures dans la scène, le facteur d'importance étant arrangé comme un pointeur pour des données de texture associées et
   des moyens dans ledit ordinateur client pour demander audit serveur de télécharger d'autres données de texture avec le facteur d'importance le plus élevé,
   le facteur d'importance P étant défini comme

$$P = \frac{C + C_b}{A},$$

   où C est un facteur de couverture d'écran qui a rapport à combien une texture couvre une surface d'écrande l'ordinateur, $C_b$ est un facteur de couverture d'écran qui a rapport à combien une texture couvre un objet situé dans une scène à l'extérieur d'un bord d'écrande l'ordinateur à proximité du point d'observation et 1/A est la distance inverse audit objet à partir d'un point d'observation.

7. Système selon la revendication 6 dans lequel lesdits moyens continuent la répétition de l'évaluation dudit facteur d'importance associé à des objets de rendu actuel et le téléchargement dudit serveur d'autres données de texture sur la base de ladite évaluation en améliorant encore l'apparence visuelle dudit rendu jusqu'à ce qu'il n'y ait plus de mémoire allouée disponible dans ledit ordinateur client.

8. Système selon la revendication 7 dans lequel lesdits moyens comprennent de plus l'effacement des données de texture associées aux facteurs de moindre importance qu'évalués actuellement et utilisés dans ledit présent rendu lorsqu'il n'y a plus de mémoire allouée disponible dans ledit ordinateur client.

9. Système d'ordinateur selon la revendication 6 comprenant :

   des moyens dans ledit serveur pour tester si lesdites données géométriques et lesdites données de texture sont au sein de limites prédéfinies,
   des moyens dans ledit serveur pour convertir lesdites données géométriques et lesdites données de texture du format virgule flottante au format de nombre entier,
   des moyens dans ledit serveur pour instancier un fichier initial pour une scène comprenant lesdites données converties,
   des moyens dans ledit ordinateur client pour reconvertir lesdites données converties du format de nombre entier au format virgule flottante avant le rendu desdites données.

10. Dispositif utilisé dans un système d'ordinateur pour la diffusion de scènes d'images tridimensionnelles modélisées mathématiquement d'un serveur à un ordinateur client par un réseau, lesdites scènes d'image modélisées mathématiquement comprenant des données géométriques décrivant des formes d'objets et des données de texture décrivant l'apparence desdits objets, ledit dispositif comprenant:

   des moyens pour demander audit serveur de transférer un fichier initial comprenant un minimum de données géométriques et de données de texture fournissant un minimum de qualité visuelle pour un rendu initial sur un écran en communication avec ledit ordinateur client,
des moyens pour calculer un facteur d'importance P pour toutes les textures utilisées dans la scène et
des moyens pour demander audit serveur de télécharger d'autres données de texture avec le facteur d'importance le plus élevé,
le facteur d'importance P étant défini comme

$$P = \frac{C + C_b}{A},$$

où C est un facteur de couverture d'écran qui a rapport à combien une texture couvre une surface d'écran de l'ordinateur, $C_b$ est un facteur de couverture d'écran qui a rapport à combien une texture couvre un objet situé dans une scène à l'extérieur d'un bord d'écran de l'ordinateur à proximité du point d'observation et 1/A est la distance inverse audit objet à partir d'un point d'observation.

Fig. 1

A3
Object 3

A2
Object 2

A1
Object 1

EP 1 800 268 B1

Fig. 2

A1
Object 1

A3
Object 3

A2
Object 2

```
                    ╭─────────────────────╮
                    │   Start download    │
                    ╰─────────────────────╯
                               │
  ┌────────────────────────────┼
  │                            ▼
  │              ┌──────────────────────────────┐
  │              │ Evaluate the users view position and │
  │              │ angle in the virtual reality scene   │
  │              └──────────────────────────────┘
  │                            │
  │                            ▼
  │              ┌──────────────────────────────┐
  │              │ Choose the next texture mipmap level │
  │              │ that will increase visual quality the most │
  │              └──────────────────────────────┘
  │                            │
  │                            ▼
  │              ╱──────────────────────────────╱
  │             ╱ Request the chosen texture mipmap ╱
  │            ╱    level from the server          ╱
  │           ╱──────────────────────────────╱
  │                            │
  │                            ▼
  │              ╱──────────────────────────────╱
  │             ╱ Receive the chosen texture mipmap ╱
  │            ╱    level from the server          ╱
  │           ╱──────────────────────────────╱
  │                            │
  │                            ▼
  │              ┌──────────────────────────────┐
  │              │ Insert the received texture mipmap level │
  │              │ in the virtual reality scene  │
  │              └──────────────────────────────┘
  │                            │
  │                            ▼
  │         NO        ╱◇◇◇◇◇◇◇◇◇◇◇◇◇◇◇◇╲
  └──────────────────<   Are all available   >
                      ╲  texture mipmap      ╱
                       ╲ levels downloaded  ╱
                         ╲◇◇◇◇◇◇◇◇◇◇◇◇╱
                               │
                             YES
                               ▼
                    ╭─────────────────────╮
                    │  Terminate download │
                    ╰─────────────────────╯
```

Figure 3

```
                    ┌─────────────────┐
                    │      Start      │
                    └─────────────────┘
                             │
                             ▼
        ┌────────────────────────────────────────┐
        │ Determine maximum and minimum x, y      │
        │ and z values for all vertex coordinates.│
        └────────────────────────────────────────┘
                             │
                             ▼
        ┌────────────────────────────────────────┐
        │ Store the maximum and minimum           │
        │       x, y and z values                 │
        └────────────────────────────────────────┘
                             │
                             ▼
        ┌────────────────────────────────────────┐
        │ For each vertex map the vertex x, y and │
        │ z values to three 16 bit unsigned values│
        │ that maps linearly to the corresponding │
        │ x, y and z minimum and maximum          │
        │              values.                    │
        └────────────────────────────────────────┘
                             │
                             ▼
        ┌────────────────────────────────────────┐
        │ Store the integer packed x, y and z     │
        │              values                     │
        └────────────────────────────────────────┘
                             │
                             ▼
        ┌────────────────────────────────────────┐
        │ For each vertex map the vertex normal   │
        │ to a 8 bit unsigned value linearly over │
        │       the interval [-1, 1]              │
        └────────────────────────────────────────┘
                             │
                             ▼
        ┌────────────────────────────────────────┐
        │ Store the integer packed normal vector  │
        │              values                     │
        └────────────────────────────────────────┘
                             │
                             ▼
                    ╱─────────────╲          YES
                  ╱ Does the vertex ╲──────────────┐
                  ╲ have texture    ╱               │
                    ╲ coordinates? ╱                ▼
                      ╲─────────╱                  ┌───┐
                           │                       │ A │
                          NO                       └───┘
                           │
                           │                       ┌───┐
                           │                       │ B │
                           │                       └───┘
                           │                        │
                           │←───────────────────────┘
                           ▼
                    ┌─────────────────┐
                    │    Terminate    │
                    └─────────────────┘
```

Figure 4a

A

Determine maximum and minimum U
and V texture mapping coordinates for
all vertices.

Does the U or V
coordinates exceed
a maximum value?

YES

NO

Store the original floating point values

Pack the U and V coordinates in a 16
bit signed integer linearly over the
interval [-max value, max value]

Store the integer packed x, y and z
values

Does the vertex
have
additional texture
coordinates?

YES

NO

B

Figure 4b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6377257 B1

- US 6396503 B1

**Non-patent literature cited in the description**

- **MARVIE ; BOUATOUCH.** Remote Rendering of Massively Textured 3D Scenes Through Progressive Texture Maps. *3rd (LASTED) conference on Visualization, Imaging and Image Processing,* September 2003, vol. 20 (3), ISBN 0-88986-382-2

- **TELLER ; LISCHINSKI.** Streaming of Complex 3D Scenes for remote Walkthrough. *European Association for Computer Graphics,* 04 September 2001, vol. 20 (3), ISSN 0167-7055